# EUROPÄISCHE PATENTSCHRIFT

(11) **EP 4 140 671 B1**
(45) Veröffentlichungstag und Bekanntmachung des Hinweises auf die Patenterteilung: **28.01.2026**
(21) Anmeldenummer: 21194030.9
(22) Anmeldetag: 31.08.2021
(51) Int. Cl.: B26D 5/00, B26D 7/00, B26F 1/38, B23Q 11/00, B23Q 15/18

(54) **SCHNEIDEMASCHINE MIT EINER TEMPERATURKOMPENSATION**
CUTTING MACHINE WITH TEMPERATURE COMPENSATION
MACHINE À COUPER À COMPENSATION DE TEMPÉRATURE

(43) Veröffentlichungstag der Anmeldung: 01.03.2023
(73) Patentinhaber: ZÜND SYSTEMTECHNIK AG, 9450 Altstätten (CH)
(72) Erfinder: MAUERMANN, Christian, 83313 Siegsdorf (DE)
(74) Vertreter: Kaminski Harmann

(56) Entgegenhaltungen:
- EP-A1- 3 425 329
- EP-A2- 3 437 794
- WO-A1-2011/045729
- US-A1- 2018 364 677

## Beschreibung

Die Erfindung betrifft eine Schneidemaschine zum Schneiden von Objekten, wobei die Schneidemaschine ein Portalfahrsystem aufweist mit einer linearen Vorschubachse als Querachse des Portalfahrsystems, sowie ein Verfahren zum Steuern einer solchen Schneidemaschine. Die erfindungsgemässe Schneidemaschine weist an der Querachse Temperatursensoren auf, deren Messwerte zum Ausführen einer Temperaturkompensationsfunktionalität verwendet werden.

Gattungsgemässe Schneidemaschinen sind beispielsweise in den Dokumenten EP 1 385 674 B1 und EP 2 488 333 B1 beschrieben. Eine solche Maschine weist eine Arbeitsfläche auf, die zur Aufnahme mindestens eines Objekts ausgestaltet ist, eine an einem Querbalken beweglich über der Arbeitsfläche angeordnete Arbeitsgruppe mit einer Schneidevorrichtung und einem Werkzeug zum Schneiden oder ähnlichen Bearbeiten (z.B. Perforieren, Falzen oder Rillen) von auf der Arbeitsfläche befindlichen Objekten. Die Objekte können insbesondere bedruckte oder unbedruckte Bögen aus Papier, Karton oder ähnlichen Materialien, Schaumstoffe, Kunststofffolien, Tücher, Fasergewebe, Leder oder ähnliches darstellen.

Viele Schneidemaschinen weisen einen Maschinengrundkörper aus einem Faserverbundwerkstoff, wie beispielsweise carbonfaserverstärkten Kunststoff (CFK) oder glasfaserverstärkten Kunststoff (GFK), auf, wobei bewegliche Teile entlang Linearführungen aus Stahl oder Aluminium geführt werden. Diese Kombination aus Faserverbundwerkstoff und Metall ist insbesondere beim Querbalken insofern problematisch, dass der Längenausdehnungskoeffizient von Faserverbundwerkstoffen - zumindest in Faserlängsrichtung - typischerweise geringer oder deutlich geringer ist als der der Metall-Führungsschienen, wenn der überwiegende Teil dieser Fasern in der Längsrichtung des Querbalkens orientiert ist.

Dadurch kommt es nachteilig zum sogenannten Bimetall-Effekt, bei dem sich zwei Materialien mit verschiedenen Ausdehnungskoeffizienten bei Erwärmung in unterschiedlichem Mass verlängern und bei Abkühlung in unterschiedlichem Mass verkürzen. Bei einer Änderung der Temperatur einer oder beider Komponenten des Balkens relativ zu derjenigen Temperatur, welche während der Montage vorherrschte, tritt daher eine unerwünschte Krümmung des Balkens auf.

Diesem Problem wird im Stand der Technik beispielsweise dadurch begegnet, dass die unterschiedliche Wärmedehnung der beiden Werkstoffe konstruktiv entschärft wird. In der DE 10 2004 047525 A1 wird die Führungsschiene axial schwimmend gelagert und mit segmentierten Klemmelementen fixiert, die einen festen Anker bilden und zugleich die axiale Ausdehnung der Schiene zulassen. Eine solche schwimmende Lagerung der Linearführung in Längsrichtung durch Wälzlagerung mit Nadellagern ist sehr aufwendig und schwer und zudem nicht beliebig klein skalierbar, und damit nur für besonders grosse Maschinen verfügbar. Es wäre daher wünschenswert, eine leichtere und konstruktiv einfachere Lösung für das Problem zu erhalten, die auch für kleinere Maschinen einsetzbar ist.

Alternativ lässt sich grundsätzlich auch durch die Faserorientierung im Faser-Matrix-Verbund das thermische Verhalten in allen drei Raumrichtungen gezielt beeinflussen, dies jedoch nur ermöglicht auf Kosten der Steifigkeit. In einem Balken der Schneidemaschine ist der Grossteil der Kohlenstoff-Fasern jedoch vorzugsweise in Balkenlängsrichtung orientiert, um mit möglichst wenig Fasermaterial eine möglichst hohe Biegesteifigkeit zu erzielen. Dadurch bewegt sich aber auch der thermische Längenausdehnungskoeffizient eines solchen CFK-Balkens in Längsrichtung sehr nahe bei Null. Eine gezielte Faserorientierung im CFK-Maschinengrundkörper führt entweder - bei Einsatz derselben Menge an Fasern - zu einem deutlichen Steifigkeitsverlust (z. B. hinsichtlich der Biegesteifigkeit) oder zu einer massiven Gewichtserhöhung zur Erzielung der gleichen Steifigkeitswerte. Es wäre daher wünschenswert, eine Lösung für das Problem zu erhalten, bei der eine hohe Steifigkeit auch bei geringem Materialeinsatz erreicht werden kann.

Aus dem technischen Gebiet der CNC-Werkzeugmaschinen ist eine Temperaturkompensation prinzipiell bekannt. So können thermisch initiierte Verlagerungen an Werkzeugmaschinen u. a. auf Basis folgender Vorgehensweisen von der NC-Steuerung kompensiert werden:
1) Ermittlung zeitlicher und örtlicher Temperaturänderungen an strukturellen Komponenten der Maschine mittels Temperatursensoren (z. B. an Maschinenbett, Ständer oder Spindelkasten);
2) Ermittlung der Längenänderungen an strukturellen Komponenten der Werkzeugmaschine mittels Dehnmessstreifen (DMS); und
3) Verwendung weiterer repräsentativer Grössen wie z.B. der Leistungen der Vorschubantriebe, der Motor-Verlustleistungen, der Kühlmittel- oder Raumtemperaturen.

Es wäre wünschenswert, eine Lösung für das Problem zu erhalten, bei der eine solche Kompensation mit einfacheren Mitteln erreicht werden kann, sowie mit Mitteln, die auf die Eigenarten einer Schneidemaschine angepasst sind.

Es ist daher eine Aufgabe der Erfindung, eine Schneidemaschine mit einer verbesserten Temperaturkompensationsfunktionalität bereitzustellen.

Es ist eine weitere Aufgabe der Erfindung, eine solche Schneidemaschine bereitzustellen, bei der die Temperaturkompensationsfunktionalität mit geringem konstruktiven Aufwand und mit geringem rechnerischen Aufwand erfolgt.

Es ist eine weitere Aufgabe der Erfindung, eine solche Schneidemaschine bereitzustellen, bei der ein Schneidpfad in Echtzeit an geänderte Temperaturen angepasst werden kann.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Ein erster Aspekt der Erfindung betrifft eine Schneidemaschine, aufweisend
- eine Arbeitsfläche, die zur Aufnahme mindestens eines zu schneidenden Objekts ausgestaltet ist,
- ein über dieser Arbeitsfläche angeordnetes Portalfahrsystem mit einem Balken und einer Arbeitsgruppe, und
- eine Recheneinheit mit einem Prozessor mit Rechenkapazität und Algorithmen zur Steuerung der Schneidemaschine.

Dabei weist die Arbeitsgruppe eine Schneidevorrichtung auf und ist entlang mindestens einer Führungsschiene des Balkens in einer ersten Richtung beweglich. Der Balken ist in einer zweiten Richtung beweglich, insbesondere wobei die erste und die zweite Richtung orthogonal zueinander sind.

Erfindungsgemäss ist an dem Balken entlang der ersten Richtung eine Vielzahl von Temperatursensoren angebracht, und die Schneidemaschine weist eine Temperaturkompensationsfunktionalität auf, in deren Rahmen die Recheneinheit dazu ausgestaltet ist, Temperaturdaten der Temperatursensoren in Echtzeit zu empfangen und zur Steuerung der Schneidemaschine heranzuziehen.

Gemäss einer Ausführungsform der erfindungsgemässen Schneidemaschine weist der Balken einen Maschinengrundkörper aus einem ersten Material auf, und die Führungsschiene besteht aus einem zweiten Material, wobei das erste Material und das zweite Material unterschiedliche Längenausdehnungskoeffizienten aufweisen.

In einer Ausführungsform ist das erste Material ein Kunststoff oder ein Faserverbundwerkstoff, insbesondere ein carbonfaserverstärkter Kunststoff (CFK) oder ein glasfaserverstärkter Kunststoff (GFK), und das zweite Material ist ein Metall, beispielsweise Stahl oder Aluminium.

In einer weiteren Ausführungsform sind die Temperatursensoren zwischen der Führungsschiene und dem Maschinengrundkörper angebracht. In einer besonderen Ausführungsform ist die Führungsschiene mittels Schrauben, Bolzen oder Nieten am Maschinengrundkörper befestigt, und die Temperatursensoren sind an diesen Schrauben, Bolzen oder Nieten angebracht.

Gemäss einer Ausführungsform der erfindungsgemässen Schneidemaschine ist eine Vielzahl von über die Querachse verteilten Temperatursensoren vorgesehen, insbesondere mindestens vier Temperatursensoren. Durch die Erhöhung der über die Querachse verteilte Anzahl an Temperatursensoren lässt sich vorteilhaft die Genauigkeit der Temperaturkompensationsfunktionalität steigern.

Gemäss einer weiteren Ausführungsform der erfindungsgemässen Schneidemaschine sind die Temperatursensoren an der Führungsschiene angebracht.

In einer besonderen Ausführungsform sind die Temperatursensoren mittels Schrauben, Bolzen oder Nieten an der Führungsschiene angebracht. Optional ist die Führungsschiene mittels Schrauben, Bolzen oder Nieten am Maschinengrundkörper befestigt, und die Temperatursensoren sind an diesen Schrauben, Bolzen oder Nieten angebracht.

In einer weiteren Ausführungsform ist die Arbeitsgruppe entlang zwei oder mehr parallelen Führungsschienen in der ersten Richtung beweglich. In diesem Fall können die Temperatursensoren entweder nur an einer oder alternativ an mehreren, d.h. mindestens zwei, bzw. an allen der parallelen Führungsschienen angebracht sein.

Gemäss einer weiteren Ausführungsform der erfindungsgemässen Schneidemaschine umfasst die Steuerung der Schneidemaschine ein Definieren eines Schneidpfades der Schneidevorrichtung und/oder ein Führen der Schneidevorrichtung entlang eines definierten Schneidpfades. Die Recheneinheit kann dann insbesondere dazu ausgestaltet sein, die Temperaturdaten zum Definieren des Schneidpfades heranzuziehen.

Erfindungsgemäss weist die Recheneinheit eine Speichereinheit zum Speichern von Aufträgen zum Schneiden (oder ähnlichen Bearbeiten) bestimmter Objekte auf und ist dazu ausgestaltet, gemäss mindestens einem gespeicherten Auftrag und basierend auf den Temperaturdaten der Temperatursensoren einen Schneidpfad für die Schneidevorrichtung zu definieren.

Die Recheneinheit ist dazu ausgestaltet, die Temperaturdaten zum Anpassen eines definierten Schneidpfades heranzuziehen, insbesondere in Echtzeit.

In einer Ausführungsform basiert das Anpassen des Schneidpfades auf in einer Umsetzungstabelle (look-up table, LUT) hinterlegten Kompensationswerten.

Das Heranziehen der Temperaturdaten kann insbesondere ein Nachschlagen der Kompensationswerte in der LUT basierend auf den Temperaturdaten der einzelnen Temperatursensoren umfassen. In der LUT können Kompensationswerte für verschiedene Positionen der Schneidevorrichtung hinterlegt sein. Ausserdem können die Kompensationswerte jeweils einen Wert zur Anpassung des Schneidpfades in der ersten Richtung und in der zweiten Richtung umfassen.

Gemäss einer weiteren Ausführungsform der erfindungsgemässen Schneidemaschine ist die Recheneinheit im Rahmen der Temperaturkompensationsfunktionalität dazu ausgestaltet, zur Steuerung der Schneidemaschine Temperaturdaten nur von denjenigen Temperatursensoren heranzuziehen, die an dem Balken entlang der ersten Richtung, d.h. insbesondere an der Führungsschiene oder zwischen der Führungsschiene und dem Maschinengrundkörper, angebracht sind. Die Schneidemaschine weist in einer Ausführungsform ausserdem keine weiteren Temperatursensoren auf, d.h. keine ausser denen, die an dem Balken entlang der ersten Richtung, bzw. an der Führungsschiene oder zwischen der Führungsschiene und dem Maschinengrundkörper, angebracht sind.

Ein zweiter Aspekt der Erfindung betrifft ein Verfahren zum Steuern einer Schneidemaschine nach einem der vorangehenden Ansprüche. Das Verfahren kann dabei als computer-implementiertes Verfahren ganz oder teilweise durch die bzw. in der Recheneinheit der Schneidemaschine ausgeführt werden, insbesondere vollautomatisch und ohne Benutzereingriff. Das Verfahren umfasst
- ein Abrufen eines Schneidauftrags zum Bearbeiten, z. B. Schneiden, eines Objekts auf einer Arbeitsfläche der Schneidemaschine mit einem in eine Schneidevorrichtung eingesetzten Werkzeug,
- ein Definieren eines Schneidpfades für die Schneidevorrichtung basierend auf dem Schneidauftrag,
- ein kontinuierliches Abrufen von Positionsdaten der Schneidevorrichtung von Positionssensoren eines über der Arbeitsfläche angeordneten Portalfahrsystems, wobei die Positionsdaten Koordinaten in mindestens einer ersten Richtung und einer zweiten Richtung enthalten, und
- ein Führen, basierend auf den Positionsdaten, der Schneidevorrichtung in mindestens der ersten Richtung und der zweiten Richtung entlang des Schneidpfades zum Bearbeiten, z. B. Schneiden, des Objekts.

Erfindungsgemäss umfasst das Verfahren eine Temperaturkompensationsfunktionalität mit einem kontinuierlichen Abrufen von Temperaturdaten von einem oder mehreren, beispielsweise mindestens vier, Temperatursensoren, und einem Heranziehen der Temperaturdaten zum Definieren des Schneidpfades und/oder für ein Anpassen des Schneidpfades.

Gemäss einer Ausführungsform des erfindungsgemässen Verfahrens werden die Temperaturdaten zum kontinuierlichen Anpassen eines definierten Schneidpfades in Echtzeit herangezogen. In einer Ausführungsform werden die Temperaturdaten auch bereits zum Definieren des Schneidpfades herangezogen.

Gemäss einer weiteren Ausführungsform umfasst das Verfahren ein Abrufen von Kompensationswerten aus einer LUT basierend auf den Temperaturdaten der einzelnen Temperatursensoren. Dabei können in der LUT Kompensationswerte für verschiedene Positionen der Schneidevorrichtung hinterlegt sein. Ausserdem können die Kompensationswerte jeweils einen Wert zur Anpassung des Schneidpfades in der ersten Richtung und in der zweiten Richtung umfassen.

Ein dritter Aspekt der vorliegenden Erfindung betrifft ein Computerprogrammprodukt mit Programmcode, der auf einem maschinenlesbaren Träger gespeichert ist, umfassend Anweisungen, die, wenn das Programm von einem Computer ausgeführt wird, eine Schneidmaschine veranlassen, die Schritte des Verfahrens zum Betreiben einer Schneidmaschine auszuführen, insbesondere wenn das Programm in einer Recheneinheit der Schneidemaschine des ersten Erfindungsaspekts ausgeführt wird.

Die erfindungsgemässe Schneidemaschine und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine beispielhafte Ausführungsform einer erfindungsgemässen Schneidemaschine;
- Fig. 2: einen Balken der Schneidemaschine mit einer Führungsschiene und daran angebrachten Temperatursensoren;
- Fig. 3a-b: einen an der Führungsschiene angebrachten Temperatursensor; und
- Fig. 4: ein Flussdiagramm zur Illustration einer beispielhaften Ausführungsform eines erfindungsgemässen Verfahrens zum Steuern einer Schneidemaschine.

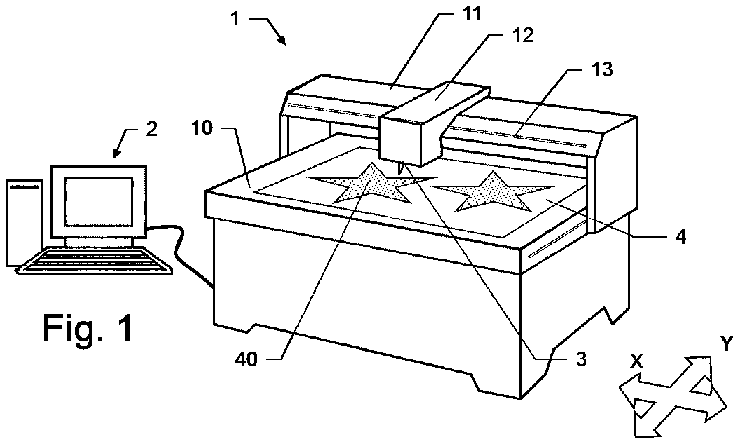

Figur 1 zeigt eine gattungsgemässe Schneidemaschine 1 in Portalbauweise. Als Flachbett-Schneidemaschine weist sie einen Tisch mit einer ebenen Arbeitsfläche 10 auf, auf welcher ein zu schneidendes Objekt 4 plazierbar ist.

Oberhalb der Arbeitsfläche 10 ist eine Arbeitsgruppe 12 mit einer Schneidevorrichtung 3 und einem in diese eingesetzten Werkzeug angeordnet, welches hier als ein Schneidwerkzeug ausgebildet ist und eine Klinge zum Schneiden des Objekts 4 aufweist. Optional können das Schneidwerkzeug oder die Klinge automatisch auswechselbar sein. Eine solche Werkzeugwechselfunktionalität ist beispielsweise in der EP 3 689 537 A1 beschrieben. Die Arbeitsgruppe 12 ist relativ zur Arbeitsfläche 10 mindestens zweidimensional motorisiert verfahrbar, um jeden Punkt der Arbeitsfläche 10 anfahren zu können. Dazu ist die Arbeitsgruppe 12 in einer ersten Richtung X beweglich an einem Querbalken 11 angebracht, der wiederum in einer zweiten Richtung Y beweglich an dem Tisch angebracht ist. Der Balken 11 und die Arbeitsgruppe 12 bilden zusammen als "Balken-Baugruppe" zumindest einen Teil des Portalfahrsystems der Maschine 1. Ein lineares Positioniersystem mit Positionsmarkierungen entlang der Längs- und der Querachse des Portalfahrsystems und entsprechende Positionssensoren am Balken 11 und an der Arbeitsgruppe 12 ermöglicht die Ermittlung der aktuellen Position der Arbeitsgruppe 12 relativ zur Arbeitsfläche in der ersten Richtung X und der zweiten Richtung Y (hier nicht dargestellt). Als Längenmesssystem zur relativen Positionsbestimmung der Achsen können beispielsweise inkrementale Längenmesssysteme mit elektronischer Messwerterfassung und mit Massverkörperungen auf materieller oder optischer Basis dienen.

Die Schneidemaschine 1 weist ausserdem eine Recheneinheit 2 auf. Diese kann wie hier dargestellt als ein externer Computer, der eine Datenverbindung mit der Maschine 1 aufweist, ausgestaltet sein oder als interne Steuereinheit in die Maschine 1 selbst integriert sein. Die Schneidemaschine 1 kann auch ein zusätzliches Bedienpult aufweisen, in welches die Recheneinheit 2 oder Teile davon integriert sind.

Die Recheneinheit 2 umfasst einen Prozessor mit Rechenkapazität und Algorithmen zur Steuerung der Schneidemaschine 1 entsprechend einem bereitgestellten Schneidauftrag. Unter "Schneiden" ist dabei nicht unbedingt ein vollständiges Durchtrennen zu verstehen, sodass ein "Schneidauftrag" ebenso einen Auftrag zum Perforieren, Falzen oder Rillen des Objekts oder auch zum Durchführen eines ähnlichen Arbeitsschritts beinhalten kann, der mit einer gattungsgemässen Maschine und einem entsprechenden Werkzeug in der Schneidevorrichtung 3 ausführbar ist. Die Recheneinheit 2 weist zudem einen Datenspeicher zum Speichern der Schneidaufträge und ggf. weiterer Daten auf.

Die Recheneinheit 2 ist zur Steuerung der Schneidevorrichtung 3 und ggf. einer Kamera (hier nicht dargestellt) ausgestaltet, insbesondere zum Verfahren der Arbeitsgruppe 12 relativ zur Arbeitsfläche 10. Eine solche Kamera der Schneidemaschine kann beispielsweise an der Arbeitsgruppe 12 vorgesehen und insbesondere dazu ausgestaltet sein, Muster 40 auf dem Objekt 4 zu erkennen, um eine genauere Positionierung des Schneidwerkzeug 3 relativ zum Objekt 4 zu gewährleisten. Dies ist beispielsweise in der WO 2018/184677 A1 beschrieben.

Zur Bereitstellung der Beweglichkeit der Arbeitsgruppe 12 entlang des Balkens 11 weist letzterer mindestens eine Führungsschiene 13, beispielsweise aus Stahl oder einem anderen Metall mit ähnlichen Eigenschaften, auf. Die Führungsschiene ist insbesondere als Profilschiene und einstückig (monolithisch) ausgestaltet. Der Körper des Balkens 11 ("Maschinengrundkörper") besteht ansonsten hauptsächlich aus einem carbonfaserverstärkten Kunststoff (CFK) oder einem ähnlichen Material, insbesondere mit einem (in Balkenlängsrichtung) ähnlich geringen Längenausdehnungskoeffizient wie CFK. Das CFK-Material des Balkens 11 unterscheidet sich hinsichtlich seines Längenausdehnungskoeffizienten deutlich vom Stahl der Führungsschiene 13. Insbesondere ist der Längenausdehnungskoeffizient des CFK-Materials - zumindest in Balkenlängsrichtung - typischerweise deutlich geringer als der der Stahl-Führungsschienen 13. Dadurch kann bei Änderungen der Temperatur eine unerwünschte Krümmung des Balkens 11 auftreten, wodurch sich nachteilig eine Position des Schneidwerkzeugs 3 gegenüber dem Objekt 4 verändert, ohne dass dies durch das Positioniersystem erkennbar ist. Dadurch kann ein fehlerhaftes Schneidergebnis entstehen.

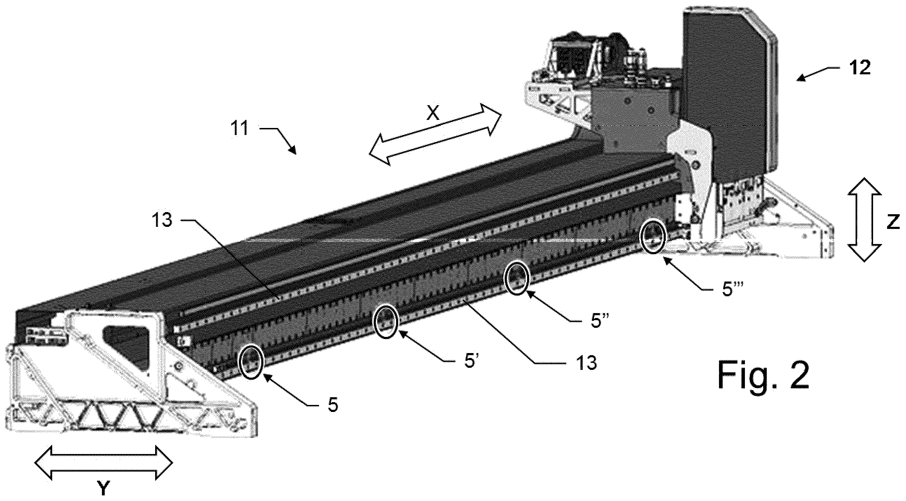

Figur 2 zeigt eine beispielhafte Ausführungsform des Querbalkens 11 mit zwei parallelen, horizontalen Führungsschienen 13, 13', entlang welchen die Arbeitsgruppe 12 in der ersten Richtung X verfahrbar angebracht ist. Erfindungsgemäss sind ein oder mehrere Temperatursensoren 5, 5', 5", 5‴ **am** Balken 11 vorgesehen, wobei diese Temperatursensoren entlang der ersten Richtung über den Balken verteilt sind. In der hier gezeigten Ausführungsform sind vier Temperatursensoren 5, 5', 5'', 5‴ an einer ersten Führungsschiene 13 angebracht, es können aber auch mehr oder weniger Temperatursensoren vorgesehen sein. Dabei lässt sich durch eine Erhöhung der Anzahl der über die Querachse verteilten Temperatursensoren die Genauigkeit einer Temperaturkompensationsfunktionalität der Maschine steigern.

Das Portalfahrsystem der Maschine weist die Balken-Baugruppe bestehend aus dem Balken 11 und der an diesem verfahrbar befestigten Arbeitsgruppe 12 mit dem Schneidwerkzeug auf. Zur Bereitstellung einer linearen Vorschubachse der Arbeitsgruppe 12 ist auf einen Maschinengrundkörper des Balkens 11 aus Kunststoff, z.B. einem carbonfaserverstärktem Kunststoff (CFK), eine Linearführung mit Führungsschienen 13, 13' aus Metall, insbesondere Stahl, montiert. Sowohl externe, umweltbedingte Temperatureinflüsse, z.B. eine Änderung der Raumtemperatur oder Sonneneinstrahlung, als auch interne, betriebsbedingte Temperatureinflüsse, z.B. Motoren-Verlustwärme oder Reibungswärme der Linearführungen, können aufgrund stark unterschiedlicher Längenausdehnungskoeffizienten der beiden Materialien zu einer relevanten Verlagerung der Vorschubachse führen (sogenannter Bimetall-Effekt) .

CFK besteht aus Kohlenstofffasern, die in eine Matrix aus Kunstharz eingebettet sind. Dabei profitieren die mechanischen Eigenschaften des ausgehärteten Verbunds vor allem von der Zugfestigkeit und der Steifigkeit der Kohlenstofffasern. Die Matrix verhindert, dass sich die Fasern unter Belastung gegeneinander verschieben. Der CFK-Maschinengrundkörper des Balkens 11 kann insbesondere einen Laminataufbau aufweisen, durch den er bei Temperaturänderungen nahezu keine Längenänderungen in Längsrichtung ausführt. Dadurch können prinzipiell alle Anbaukomponenten mit thermischen Längenausdehnungskoeffizienten ungleich Null als Störgrössen betrachtet werden. Die als Profilschienen ausgeführten Führungsschienen 13, 13' aus Stahl bilden dabei in dieser Konstellation die Komponente mit dem grössten Einfluss auf das thermische Verhalten der Vorschubachse, da sie aufgrund des Werkstoffs und des Querschnitts, sowie auch aufgrund der durchgehenden Länge (am Stück montiert) die mit Abstand am grössten thermischen Kräfte bei Temperaturänderungen erzeugen. Mögliche weitere Anbaukomponenten (z.B. Sekundärteile eines Linearmotors) liefern aufgrund ihres Querschnitts und ihrer Ausführung in nicht durchgehenden Segmentstücken nur einen verhältnismässig geringfügigen - und daher zumeist vernachlässigbaren - Beitrag zur Gesamtverlagerung. Es kann deshalb bereits alleine durch die Erfassung der Führungsschienentemperatur eine deutliche Kompensation der Achsverlagerung erreicht werden. Die thermisch initiierten Verlagerungen der linearen Vorschubachse im CFK-Stahl-Verbund können daher vorteilhaft ausschliesslich durch die Erfassung der Störgrössentemperatur kompensiert werden. Dazu wird entlang der Vorschubachse an mehreren Stellen durch die Temperatursensoren 5, 5', 5", 5‴ die Temperatur der Störgrösse gemessen und mittels vorgängig hinterlegter Kompensationswerte die Position durch die NC-Steuerung korrigiert. Durch die Kombination des CFK-Grundkörpers des Balkens 11 mit den Stahl-Führungsschienen 13, 13' ergibt sich für das Gesamtsystem ein spezifisches thermisches Verhalten, das abhängig von den Steifigkeitswerten und den Längenausdehnungskoeffizienten der beiden unterschiedlichen Komponenten ist. Das spezifische, thermische Verhalten des Gesamtsystems kann im Voraus durch Messungen und/oder Simulationen bestimmt werden und daraus die nötigen Positions-Korrekturwerte ermittelt und in einem Speicher der Schneidemaschine, bzw. der Recheneinheit, hinterlegt werden.

Durch Erfassung der Führungsschienentemperatur an mehreren Stellen entlang des Verfahrweges der Arbeitsgruppe 12 können auch örtlich begrenzte Temperaturänderungen erfasst werden, welche sich z.B. durch direkte Sonneneinstrahlung oder durch eine ungleichmässige, z.B. örtlich begrenzte, Verfahrbewegung der Achse einstellen. Eine höhere Anzahl an Temperatursensoren 5, 5', 5", 5‴ und eine von der jeweiligen Maschine abhängige, zielgerichtete Verteilung der Sensoren entlang der Querachse kann prinzipiell zu einer genaueren Erfassbarkeit der Temperaturverteilung führen.

Alternativ ist auch eine Profilschienenführung mit Profilschienen aus einem anderem Material als Stahl möglich, insbesondere mit Aluminium-Profilschienen. Bei diesen kann das Grundprofil der Profilschiene aus einer AluminiumLegierung gefertigt sein, und die Laufbahnen der Wälzkörper können kleine eingesetzte (meist eingepresste) Profile aus Stahl sein. Typischerweise werden solche Profilschienenführungen aus Aluminium-Legierungen vor allem bei Anwendungen mit geringen Belastungen, mit geringen Anforderungen an die Präzision und/oder mit hohen Anforderungen an geringe Massen eingesetzt werden, z.B. in den Bereichen der Handhabungstechnik, Montagetechnik, Fördertechnik, des Leichtmaschinenbaus und grundsätzlich auch bei Schneidemaschinen - entweder als Hauptführungen oder als zusätzliche, unterstützende Führungen. Auch bei Aluminium-Profilschienen kommt es in Kombination mit dem CFK-Balken zum Bimetall-Effekt und zu den unerwünschten Folgen daraus.

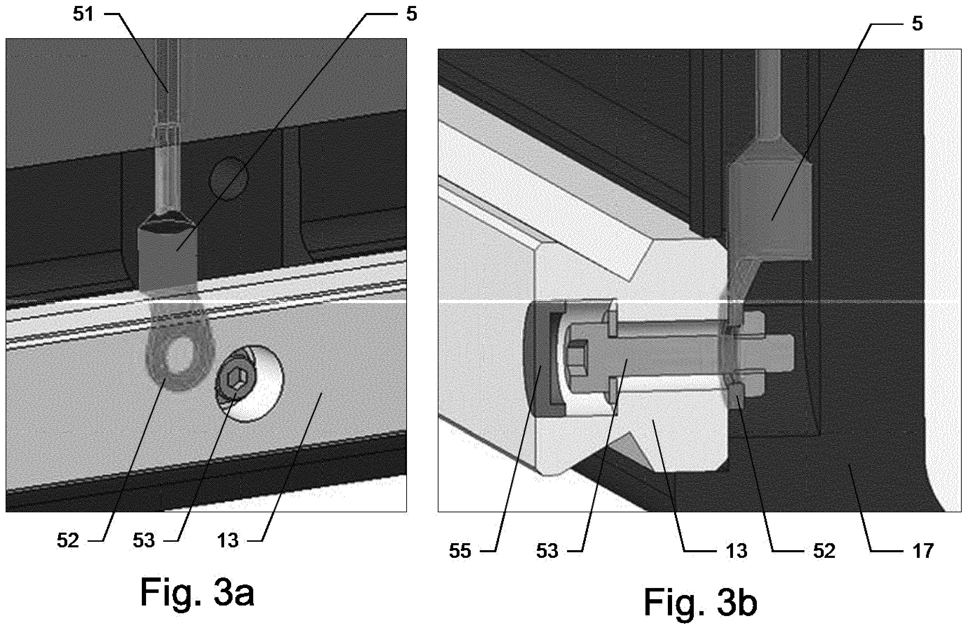

Die Figuren 3a und 3b zeigen in einer Detailansicht einen beispielhaften Temperatursensor 5, der hinter einer Führungsschiene 13 angebracht ist, um eine Temperatur der Führungsschiene 13 an dieser Stelle zu erfassen. Figur 3a zeigt dabei eine Aussenansicht der Führungsschiene 13 mit dem dahinter angebrachten Temperatursensor 5, und Figur 3b zeigt einen Querschnitt.

Über ein Kabel 51 kann der Temperatursensor 5 einerseits mit Elektrizität versorgt werden, und andererseits Temperaturdaten mit Informationen über gemessenen Temperaturen an die Recheneinheit der Schneidemaschine gesendet werden.

Der Temperatursensor 5 weist eine ringförmige Scheibe 52 auf, die dazu ausgestaltet ist, so an Schraube 53 angebracht zu werden, dass sie stets die Führungsschiene 13 kontaktiert und eine ortsfeste Befestigung des Temperatursensors 5 gewährleistet. Die Schraube 53 kann auf der Aussenseite mit einer Abdeckung 55 versehen sein. Ist die Führungsschiene 13 auf dem Maschinengrundkörper 17 aus CFK aufgeschraubt, kann der Temperatursensor 5 auf dieselbe Weise auch an einer die Führungsschiene 13 mit dem Maschinengrundkörper 17 befestigenden Schraube 53 angebracht werden. Anstelle der hier gezeigten Schraube 53 können auch andere Befestigungsmittel verwendet werden, z.B. Bolzen oder Nietverbindungen, an denen der Temperatursensor 5 anbringbar ist.

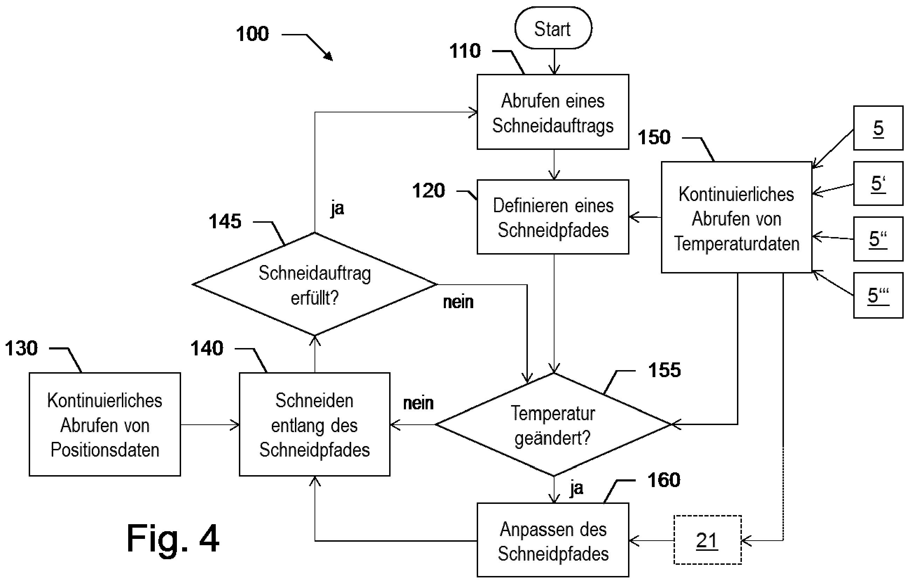

Figur 4 zeigt ein Flussdiagramm zur Illustration einer beispielhaften Ausführungsform eines erfindungsgemässen Verfahrens 100 zum Steuern einer Schneidemaschine.

Aus dem Stand der Technik ist bekannt, einen in einem Speicher der Maschine hinterlegten Schneidauftrag, bzw. anderen Bearbeitungsauftrag (statt Schneiden kann auch ein ähnlicher Arbeitsschritt, wie Perforieren, Falzen oder Rillen des Objekts beauftragt werden) abzurufen 110, und darauf basierend einen Schneidpfad (bzw. Bearbeitungspfad) für das Werkzeug, z.B. Messer, zu definieren 120. Von Positionssensoren der Maschine, beispielsweise eines über einer Arbeitsfläche der Maschine angeordneten Portalfahrsystems mit einem Balken und einer Arbeitsgruppe, wie in Figur 1 dargestellt, werden kontinuierlich aktuelle Positionsdaten abgerufen 130. Basierend auf diesen Positionsdaten wird das Werkzeug entlang des definierten Schneidpfades geführt und kann so die im Schneidauftrag beauftragte Bearbeitung des Objekts ausführen, insbesondere ein Schneiden 140 des Objekts.

Erfindungsgemäss werden zusätzlich zu den oben genannten Schritten 110, 120, 130, 140 des Verfahren 100 kontinuierlich Temperaturdaten von einem Temperatursensor, bzw. insbesondere einer Vielzahl von Temperatursensoren 5, 5', 5", 5‴, z.B. mindestens vier Temperatursensoren 5, 5', 5'', 5‴, die wie in Figur 2 dargestellt an einer Führungsschiene des Balkens verteilt sind, abgerufen 150 und von einer Recheneinheit automatisch zur Steuerung der Scheidemaschine herangezogen.

In dem in Figur 4 dargestellten, rein beispielhaften Verfahren werden die Temperaturdaten zum einen für das Definieren 120 des Schneidpfades herangezogen. Dazu wird die zum Zeitpunkt des Definierens 120 herrschende Temperaturverteilung ermittelt. Zur Kompensation einer durch diese Temperaturverteilung entstehende Verbiegung von Maschinenkomponenten, insbesondere des Balkens, werden Koordinaten des Schneidpfades entsprechend angepasst.

Zusätzlich wird in dem hier dargestellten Verfahren 100 kontinuierlich geprüft 155, ob sich die Temperaturverteilung in relevantem Umfang geändert hat. Wenn nicht, wird der definierte Schneidpfad weiter abgefahren, um das Objekt gemäss Schneidauftrag zu schneiden 140 (oder anderweitig zu bearbeiten). Wenn sich hingegen die Temperaturverteilung in relevantem Umfang geändert hat, kann der Schneidpfad in Echtzeit entsprechend angepasst werden 160, so dass von da an vom Werkzeug der so angepasste Schneidpfad weiter abgefahren wird, um das Objekt gemäss Schneidauftrag zu schneiden 140 (oder anderweitig zu bearbeiten). Diese kontinuierliche Prüfung 155 der Temperaturänderung und ggf. Anpassung 160 des Schneidpfades kann solange wiederholt werden, bis der Schneidauftrag erfüllt ist 145. Danach kann mit dem Abrufen 110 eines neuen Schneidauftrags das Verfahren 100 für diesen neuen Schneidauftrag wiederholt werden.

Eine Vielzahl an möglichen Temperaturverteilungen kann in einer Umsetzungstabelle 21 (look-up table, LUT) hinterlegt sein. So kann für jede mögliche Kombination von Temperaturwerten jedes der vorhandenen Temperatursensoren ein entsprechender Korrekturwert angegeben werden. Die in der LUT hinterlegten Temperaturwerte können dabei beispielsweise jeweils eine Temperatur in Zehntel-Grad-Celsius-Schritten angeben. Optional kann für jede Temperaturverteilung eine Vielzahl von Korrekturwerten für eine Vielzahl möglicher Positionen oder Positionsbereiche des Werkzeugs angegeben sein, beispielsweise wenn sich eine Verbiegung des Balkens durch eine bestimmte Temperaturverteilung in einem Bereich stärker auf das Schneidergebnis auswirkt als in einem anderen Bereich. Die LUT 21 kann dabei beispielsweise in einer Speichereinheit der Recheneinheit der Schneidemaschine gespeichert sein.

Alternativ können eine oder mehrere mathematische Formeln hinterlegt sein, um den Korrekturwert aus der Temperaturverteilung durch die Recheneinheit rechnerisch zu ermitteln. Optional kann für eine Vielzahl möglicher Positionen oder Positionsbereiche des Werkzeugs eine Vielzahl an Formeln hinterlegt sein.

Bei der Prüfung 155, ob sich die Temperaturverteilung in relevantem Umfang geändert hat, kann zum Beispiel überprüft werden, ob einer oder mehrere der erhaltenen Temperaturwerte einen vordefinierten Grenzwert überschritten haben. Alternativ oder zusätzlich kann auch geprüft werden, ob eine daraus resultierende Krümmung des Balkens relevante Auswirkungen hat, beispielsweise ob eine Positionsabweichung des Werkzeugs an einer oder mehreren Stellen einen vordefinierten Grenzwert überschreitet, wobei dieser Grenzwert optional auch von einer Genauigkeitsanforderung des Schneidauftrags abhängen kann.

Es versteht sich, dass diese dargestellten Figuren nur mögliche Ausführungsbeispiele schematisch darstellen. Die verschiedenen Ansätze können ebenso miteinander sowie mit Vorrichtungen oder Verfahren des Stands der Technik kombiniert werden.

## Patentansprüche

1. Schneidemaschine (1), aufweisend
- eine Arbeitsfläche (10), die zur Aufnahme mindestens eines zu schneidenden Objekts (4) ausgestaltet ist,
- ein über der Arbeitsfläche (10) angeordnetes Portalfahrsystem mit einem Balken (11) und einer Arbeitsgruppe (12), und
- eine Recheneinheit (2) aufweisend einen Prozessor mit Rechenkapazität und Algorithmen zur Steuerung der Schneidemaschine (1), wobei die Steuerung ein Definieren (120) eines Schneidpfades der Schneidevorrichtung (3) und/oder ein Führen der Schneidevorrichtung (3) entlang eines definierten Schneidpfades umfasst,
wobei
- die Arbeitsgruppe (12) eine Schneidevorrichtung (3) aufweist und entlang mindestens einer Führungsschiene (13) des Balkens (11) in einer ersten Richtung (X) beweglich ist, und
- der Balken (11) in einer zweiten Richtung (Y) beweglich ist, insbesondere wobei die erste und die zweite Richtung (X, Y) orthogonal zueinander sind,
**dadurch gekennzeichnet, dass**
- an dem Balken (11) entlang der ersten Richtung (X) mehrere Temperatursensoren (5, 5', 5", 5‴) angebracht sind, und
- die Schneidemaschine (1) eine Temperaturkompensationsfunktionalität aufweist, in deren Rahmen die Recheneinheit (2) dazu ausgestaltet ist, Temperaturdaten der Temperatursensoren (5, 5', 5", 5‴) in Echtzeit zu empfangen und zur Steuerung der Schneidemaschine heranzuziehen,
wobei
- die Recheneinheit (2) dazu ausgestaltet ist, die Temperaturdaten zum Anpassen (160) eines definierten Schneidpfades in Echtzeit heranzuziehen; und/oder
- die Recheneinheit (2) eine Speichereinheit zum Speichern von Aufträgen zum Schneiden bestimmter Objekte (4) aufweist und dazu ausgestaltet ist, gemäss mindestens einem gespeicherten Auftrag und basierend auf den Temperaturdaten der Temperatursensoren (5, 5', 5", 5‴) einen Schneidpfad für die Schneidevorrichtung (15) zu definieren (120).

2. Schneidemaschine (1) nach Anspruch 1,
**dadurch gekennzeichnet, dass**
der Balken (11) einen Maschinengrundkörper (17) aus einem ersten Material aufweist, und die Führungsschiene (13) aus einem zweiten Material besteht, wobei das erste Material und das zweite Material unterschiedliche Längenausdehnungskoeffizienten aufweisen.

3. Schneidemaschine (1) nach Anspruch 2,
**dadurch gekennzeichnet, dass**
das erste Material ein Kunststoff oder ein Faserverbundwerkstoff ist, insbesondere ein carbonfaserverstärkter oder glasfaserverstärkter Kunststoff, und das zweite Material ein Metall ist, insbesondere Stahl.

4. Schneidemaschine (1) nach Anspruch 2 oder Anspruch 3, **dadurch gekennzeichnet, dass**
die Temperatursensoren (5, 5', 5", 5‴) zwischen der Führungsschiene (13) und dem Maschinengrundkörper (17) angebracht sind, insbesondere wobei
- die Führungsschiene (13) mittels Schrauben (53), Bolzen oder Nieten am Maschinengrundkörper (17) befestigt ist, und die Temperatursensoren (5, 5', 5", 5‴) an den Schrauben (53), Bolzen oder Nieten angebracht sind, oder
- die Temperatursensoren (5, 5', 5", 5‴) an separaten Schrauben (53), Bolzen oder Nieten angebracht sind.

5. Schneidemaschine (1) nach einem der vorangehenden Ansprüche,
**dadurch gekennzeichnet, dass**
an dem Balken (11) entlang der ersten Richtung (X) mindestens vier Temperatursensoren (5, 5', 5", 5‴) angebracht sind.

6. Schneidemaschine (1) nach einem der vorangehenden Ansprüche,
**dadurch gekennzeichnet, dass**
die Temperatursensoren (5, 5', 5", 5‴) an der Führungsschiene (13) angebracht sind, insbesondere wobei die Temperatursensoren (5, 5', 5", 5‴) mittels Schrauben (53), Bolzen oder Nieten an der Führungsschiene (13) angebracht sind.

7. Schneidemaschine (1) nach einem der vorangehenden Ansprüche, wobei
- die Arbeitsgruppe (12) entlang zwei oder mehr parallelen Führungsschienen (13, 13') in der ersten Richtung (X) beweglich ist, und
- die Temperatursensoren (5, 5', 5", 5‴) an mindestens zwei der parallelen Führungsschienen (13, 13') angebracht sind.

8. Schneidemaschine (1) nach einem der vorangehenden Ansprüche,
**dadurch gekennzeichnet, dass**
das Anpassen (160) des Schneidpfades auf in einer Umsetzungstabelle (21) hinterlegten Kompensationswerten basiert, insbesondere wobei
- das Heranziehen der Temperaturdaten ein Nachschlagen der Kompensationswerte in der Umsetzungstabelle (21) basierend auf den Temperaturdaten der einzelnen Temperatursensoren (5, 5', 5", 5‴) umfasst,
- in der Umsetzungstabelle (21) Kompensationswerte für verschiedene Positionen der Schneidevorrichtung (3) hinterlegt sind, und/oder
- die Kompensationswerte jeweils einen Wert zur Anpassung des Schneidpfades in der ersten Richtung (X) und in der zweiten Richtung (Y) umfassen.

9. Schneidemaschine (1) nach einem der vorangehenden Ansprüche,
**dadurch gekennzeichnet, dass**
- die Recheneinheit (2) im Rahmen der Temperaturkompensationsfunktionalität dazu ausgestaltet ist, zur Steuerung der Schneidemaschine (1) Temperaturdaten nur von denjenigen Temperatursensoren (5, 5', 5", 5‴) heranzuziehen, die an dem Balken (11) entlang der ersten Richtung (X), insbesondere an der Führungsschiene (13) oder zwischen der Führungsschiene (13) und dem Maschinengrundkörper (17), angebracht sind; und/oder
- die Schneidemaschine keine weiteren Temperatursensoren aufweist, als diejenigen Temperatursensoren (5, 5', 5", 5‴), die an dem Balken (11) entlang der ersten Richtung (X), insbesondere an der Führungsschiene (13) oder zwischen der Führungsschiene (13) und dem Maschinengrundkörper (17), angebracht sind.

10. Computer-implementiertes Verfahren (100) zum Steuern einer Schneidemaschine (1) nach einem der vorangehenden Ansprüche, mit
- einem Abrufen (110) eines Schneidauftrags zum Bearbeiten, insbesondere Schneiden, eines Objekts (4) auf einer Arbeitsfläche (10) der Schneidemaschine mit einem in eine Schneidevorrichtung (3) eingesetzten Werkzeug,
- einem Definieren (120) eines Schneidpfades für die Schneidevorrichtung (3) basierend auf dem Schneidauftrag,
- einem kontinuierlichen Abrufen (130) von Positionsdaten der Schneidevorrichtung (3) von Positionssensoren eines über der Arbeitsfläche (10) angeordneten Portalfahrsystems, wobei die Positionsdaten Koordinaten in mindestens einer ersten Richtung (X) und einer zweiten Richtung (Y) enthalten, und
- einem Führen, basierend auf den Positionsdaten, der Schneidevorrichtung (3) in mindestens der ersten Richtung (X) und der zweiten Richtung (Y) entlang des Schneidpfades zum Bearbeiten, insbesondere Schneiden (140), des Objekts (4),
**gekennzeichnet durch**
eine Temperaturkompensationsfunktionalität mit
- einem kontinuierlichen Abrufen (150) von Temperaturdaten von mehreren entlang der ersten Richtung (X) an einem in der zweiten Richtung (Y) beweglichen Balken (11) des Portalfahrsystems angeordneten Temperatursensoren (5, 5', 5", 5‴), und
- einem Heranziehen der Temperaturdaten zum Definieren (120) des Schneidpfades und/oder für ein Anpassen (160) des Schneidpfades.

11. Verfahren (100) nach Anspruch 10,
**dadurch gekennzeichnet, dass**
die Temperaturdaten zum kontinuierlichen Anpassen (160) eines definierten Schneidpfades in Echtzeit herangezogen werden, insbesondere wobei die Temperaturdaten auch zum Definieren (120) des Schneidpfades herangezogen werden.

12. Verfahren (100) nach Anspruch 10 oder Anspruch 11, **gekennzeichnet durch**
ein Abrufen von Kompensationswerten aus einer Umsetzungstabelle (21) basierend auf den Temperaturdaten der einzelnen Temperatursensoren (5, 5', 5", 5‴), wobei
- in der Umsetzungstabelle (21) Kompensationswerte für verschiedene Positionen der Schneidevorrichtung (3) hinterlegt sind, und/oder
- die Kompensationswerte jeweils einen Wert zur Anpassung des Schneidpfades in der ersten Richtung (X) und in der zweiten Richtung (Y) umfassen.

13. Computerprogrammprodukt mit Programmcode, der auf einem maschinenlesbaren Träger gespeichert ist, umfassend Anweisungen, die, wenn das Programm von einem Computer ausgeführt wird, eine Schneidmaschine veranlassen, die Schritte des Verfahrens nach einem der Ansprüche 10 bis 12 zum Betreiben einer Schneidemaschine (1) auszuführen, insbesondere wenn das Programm in einer Recheneinheit (2) der Schneidemaschine (1) nach einem der Ansprüche 1 bis 9 ausgeführt wird.

## Claims

1. A cutting machine (1), having
- a work surface (10) which is designed to receive at least one object (4) to be cut,
- a gantry drive system with a beam (11) and a work group (12) arranged above the work surface (10), and
- a computing unit (2) having a processor with computing capacity and algorithms for controlling the cutting machine (1), wherein the controlling comprises defining (120) a cutting path of the cutting device (3) and/or guiding the cutting device (3) along a defined cutting path,
wherein
- the work group (12) has a cutting device (3) and is movable in a first direction (X) along at least one guide rail (13) of the beam (11), and
- the beam (11) is movable in a second direction (Y), in particular wherein the first and the second direction (X, Y) are orthogonal to one another,
**characterised in that**
- several temperature sensors (5, 5', 5", 5"') are attached to the beam (11) along the first direction (X), and
- the cutting machine (1) has a temperature compensation functionality in the framework of which the computing unit (2) is designed to receive temperature data of the temperature sensors (5, 5', 5", 5‴) in real time and to consult them for controlling the cutting machine,
wherein
- the computing unit (2) is designed to consult the temperature data for adapting (160) a defined cutting path in real time; and/or
- the computing unit (2) has a storage unit for storing orders for cutting particular objects (4) and is designed to define (120) a cutting path for the cutting device (15) according to at least one stored order and based on the temperature data of the temperature sensors (5, 5', 5", 5"').

2. The cutting machine (1) according to claim 1,
**characterised in that**
the beam (11) has a machine base body (17) of a first material and the guide (13) rail consists of a second material, wherein the first material and the second material have different longitudinal extension coefficients.

3. The cutting machine (1) according to claim 2,
**characterised in that**
the first material is a plastic or a fibre composite material, in particular a carbon-fibre strengthened or glass fibre strengthened plastic, and the second material is a metal, in particular steel.

4. The cutting machine (1) according to claim 2 or claim 3,
**characterised in that**
the temperature sensors (5, 5', 5", 5"') are attached between the guide rail (13) and the machine base body (17), in particular wherein
- the guide rail (13) is fastened to the machine base body (17) by means of screws (53), bolts or rivets and the temperature sensors (5, 5', 5", 5"') are attached to the screws (53), bolts or rivets, or
- the temperature sensors (5, 5', 5", 5"') are attached to separate screws (53), bolts or rivets.

5. The cutting machine (1) according to any one of the preceding claims, **characterised in that**
at least four temperature sensors (5, 5', 5", 5"') are attached to the beam (11) along the first direction (X).

6. The cutting machine (1) according to any one of the preceding claims, **characterised in that**
the temperature sensors (5, 5', 5", 5"') are attached to the guide rail (13), in particular wherein the temperature sensors (5, 5', 5", 5"') are attached to the guide rail (13) by means of screws (53), bolts or rivets.

7. The cutting machine (1) according to any one of the preceding claims, wherein
- the work group (12) is movable along two or more parallel guide rails (13, 13') in the first direction (X), and
- the temperature sensors (5, 5', 5", 5"') are attached to at least two of the parallel guide rails (13, 13').

8. The cutting machine (1) according to any one of the preceding claims, **characterised in that**
adapting (160) the cutting path is based on compensation values deposited in an implementation table (21), in particular wherein
- consulting the temperature data comprises looking up the compensation values in the implementation table (21) based on the temperature data of the individual temperature sensors (5, 5', 5", 5"'),
- compensation values for different positions of the cutting device (3) are deposited in the implementation table (21), and/or
- the compensation values each comprise a value for adapting the cutting path in the first direction (X) and in the second direction (Y).

9. The cutting machine (1) according to any one of the preceding claims, **characterised in that**
- the computing unit (2) is designed in the framework of the temperature compensation functionality to consult temperature data for controlling the cutting machine (1) only from those temperature sensors (5, 5', 5", 5"') which are attached to the beam (11) along the first direction (X), in particular on the guide rail (13) or between the guide rail (13) and the machine base body (17); and/or
- the cutting machine does not have any further temperature sensors than those temperature sensors (5, 5', 5", 5"') which are attached to the beam (11) along the first direction (X), in particular on the guide rail (13) or between the guide rail (13) and the machine base body (17).

10. A computer-implemented method (100) for controlling a cutting machine (1) according to any one of the preceding claims, with
- retrieving (110) a cutting order for processing, in particular cutting, an object (4) on a work surface (10) of the cutting machine with a tool inserted into a cutting device (3),
- defining (120) a cutting path for the cutting device (3) based on the cutting order,
- continuously retrieving (130) position data of the cutting device (3) from position sensors of a gantry drive system arranged above the work surface (10), wherein the position data contain coordinates in at least a first direction (X) and a second direction (Y), and
- guiding, based on the position data, the cutting device (3) in at least the first direction (X) and the second direction (Y) along the cutting path for processing, in particular cutting (140), the object (4),
**characterised by**
a temperature compensation functionality with
- continuously retrieving (150) temperature data of several temperature sensors (5, 5', 5", 5"') arranged along the first direction (X) on a beam (11) of the gantry drive system movable in the second direction (Y), and
- consulting the temperature data for defining (120) the cutting path and/or for adapting (160) the cutting path.

11. The method (100) according to claim 10,
**characterised in that**
the temperature data are consulted for continuously adapting (160) a defined cutting path in real time, in particular wherein the temperature data are also consulted for defining (120) the cutting path.

12. The method (100) according to claim 10 or claim 11,
**characterised by**
retrieving compensation values from an implementation table (21) based on the temperature data of the individual temperature sensors (5, 5', 5", 5"'), wherein
- compensation values for different positions of the cutting device (3) are deposited in the implementation table (21), and/or
- the compensation values each comprise a value for adapting the cutting path in the first direction (X) and in the second direction (Y).

13. A computer programme product with a programme code which is stored on a machine-readable carrier, comprising instructions, which, when the programme is executed by a computer, cause a cutting machine to execute the steps of the method according to any one of claims 10 to 12 for operating a cutting machine (1), in particular when the programme is executed in a computing unit (2) of the cutting machine (1) according to any one of claims 1 to 9.

## Revendications

1. Machine à couper (1) comprenant
- une surface de travail (10) conçue pour recevoir au moins un objet à couper (4),
- un système de déplacement à portique disposé au-dessus de la surface de travail (10) avec une poutre (11) et un groupe de travail (12), et
- une unité de calcul (2) comprenant un processeur avec une capacité de calcul et des algorithmes pour commander la machine à couper (1), la commande comprenant la définition (120) d'un trajet de coupe du dispositif de coupe (3) et/ou le guidage du dispositif de coupe (3) le long d'un trajet de coupe défini, où
- le groupe de travail (12) comprend un dispositif de coupe (3) et est mobile le long d'au moins un rail de guidage (13) de la poutre (11) dans une première direction (X), et
- la poutre (11) est mobile dans une deuxième direction (Y), en particulier la première et la deuxième direction (X, Y) étant orthogonales l'une par rapport à l'autre,
**caractérisée en ce que**
- le long de la poutre (11) dans la première direction (X) plusieurs capteurs de température (5, 5', 5", 5"') sont fixés, et
- la machine à couper (1) présente une fonctionnalité de compensation de température, dans le cadre de laquelle l'unité de calcul (2) est conçue pour recevoir en temps réel les données de température des capteurs de température (5, 5', 5", 5"') et afin de les utiliser pour la commande de la machine à couper,
où
- l'unité de calcul (2) est conçue pour utiliser les données de température afin d'ajuster (160) en temps réel un trajet de coupe défini ; et/ou
- l'unité de calcul (2) comprend une unité de mémoire pour stocker des tâches de coupe d'objets spécifiques (4) et est conçue pour définir (120) une trajectoire de coupe pour le dispositif de coupe (15) en fonction d'au moins une tâche stockée et sur la base des données de température des capteurs de température (5, 5', 5", 5"').

2. Machine à couper (1) selon la revendication 1,
**caractérisée en ce que**
la poutre (11) comporte un corps de base de machine (17) constitué d'un premier matériau, et le rail de guidage (13) est constitué d'un deuxième matériau, le premier matériau et le deuxième matériau présentant des coefficients de dilatation linéaire différents.

3. Machine à couper (1) selon la revendication 2,
**caractérisée en ce que**
le premier matériau est un plastique ou un matériau composite renforcé de fibres, en particulier un plastique renforcé de fibres de carbone ou de fibres de verre, et le deuxième matériau est un métal, en particulier de l'acier.

4. Machine à couper (1) selon la revendication 2 ou la revendication 3, **caractérisée en ce que** les capteurs de température (5, 5', 5", 5"') sont montés entre le rail de guidage (13) et le corps de base (17) de la machine, en particulier où
- le rail de guidage (13) est fixé au corps de base (17) de la machine à l'aide de vis (53), de boulons ou de rivets, et les capteurs de température (5, 5', 5", 5"') sont fixés aux vis (53), boulons ou rivets, ou
- les capteurs de température (5, 5', 5", 5"') sont fixés à des vis (53), boulons ou rivets séparés.

5. Machine à couper (1) selon l'une des revendications précédentes, **caractérisée en ce que**
au moins quatre capteurs de température (5, 5', 5", 5"') sont montés sur la poutre (11) le long de la première direction (X).

6. Machine à couper (1) selon l'une des revendications précédentes, **caractérisée en ce que**
les capteurs de température (5, 5', 5", 5"') sont montés sur le rail de guidage (13), en particulier les capteurs de température (5, 5', 5", 5"') étant fixés au rail de guidage (13) à l'aide de vis (53), de boulons ou de rivets.

7. Machine à couper (1) selon l'une des revendications précédentes, où
- le groupe de travail (12) est mobile dans la première direction (X) le long de deux ou plusieurs rails de guidage parallèles (13, 13'), et
- les capteurs de température (5, 5', 5", 5"') sont montés sur
au moins deux des rails de guidage parallèle (13, 13').

8. Machine à couper (1) selon l'une des revendications précédentes, **caractérisée en ce que**
l'ajustement (160) du trajet de coupe est basé sur des valeurs de compensation enregistrées dans une table de conversion (21), en particulier où
- le recours aux données de température implique une consultation des valeurs de compensation dans la table de conversion (21) sur la base des données de température des différents capteurs de température (5, 5', 5", 5"'),
- des valeurs de compensation pour différentes positions du dispositif de coupe (3) sont enregistrées dans le tableau de conversion (21), et/ou
- les valeurs de compensation comprennent chacune une valeur pour ajuster la trajectoire de coupe dans la première direction (X) et dans la deuxième direction (Y).

9. Machine à couper (1) selon l'une des revendications précédentes, **caractérisée en ce que**
- l'unité de calcul (2) est conçue, dans le cadre de la fonctionnalité de compensation de température, pour contrôler la machine à couper (1) en utilisant uniquement les données de température provenant des capteurs de température (5, 5', 5", 5"') qui sont montés sur la poutre (11) le long de la première direction (X), en particulier sur le rail de guidage (13) ou entre le rail de guidage (13) et le corps de base de la machine (17) ; et/ou
- la machine à couper ne comporte pas d'autres capteurs de température que les capteurs de température (5, 5', 5", 5"') qui sont montés sur la poutre (11) le long de la première direction (X), en particulier sur le rail de guidage (13) ou entre le rail de guidage (13) et le corps de base de la machine (17).

10. Procédé mis en œuvre par ordinateur (100) pour commander une machine à
couper (1) selon l'une des revendications précédentes, comprenant
- une récupération (110) d'une tâche de coupe à traiter, qui consiste en particulier à couper un objet (4) sur une surface de travail (10) de la machine à couper à l'aide d'un outil inséré dans un dispositif de coupe (3),
- définir (120) un trajet de coupe pour le dispositif de coupe (3) sur la base de la tâche de coupe,
- une récupération continue (130) des données de position du dispositif de coupe (3) à partir de capteurs de position d'un système de déplacement à portique disposé au-dessus de la surface de travail (10), où les données de position contiennent des coordonnées dans au moins une première direction (X) et une deuxième direction (Y), et
- un guidage, basé sur les données de position, du dispositif de coupe (3) dans au moins la première direction (X) et la deuxième direction (Y) le long du trajet de coupe pour le traitement, en particulier la coupe (140), de l'objet (4),
**caractérisé par**
une fonctionnalité de compensation de température avec
- une récupération continue (150) des données de température à partir de plusieurs capteurs de température (5, 5', 5", 5"') disposés le long de la première direction (X) sur une poutre mobile (11) du système de déplacement à portique dans la deuxième direction (Y), et
- une utilisation des données de température pour définir (120) la trajectoire de coupe et/ou pour ajuster (160) la trajectoire de coupe.

11. Procédé (100) selon la revendication 10,
**caractérisé en ce que**
les données de température sont utilisées pour adapter en continu (160) une trajectoire de coupe définie en temps réel, les données de température étant également utilisées pour définir (120) la trajectoire de coupe.

12. Procédé (100) selon la revendication 10 ou la revendication 11,
**caractérisé par**
la récupération de valeurs de compensation à partir d'une table de conversion (21) sur la base des données de température des différents capteurs de température (5, 5', 5", 5"'), où
- dans le tableau de conversion (21) sont enregistrées des valeurs de compensation pour différentes positions du dispositif de coupe (3), et/ou
- les valeurs de compensation comprennent chacune une valeur pour l'ajustement de la trajectoire de coupe dans la première direction (X) et dans la deuxième direction (Y).

13. Produit logiciel informatique comprenant un code logiciel stocké sur un support lisible par machine, comprenant des instructions qui, lorsque le programme est exécuté par un ordinateur, amènent une machine à couper à exécuter les étapes du procédé selon l'une des revendications 10 à 12 pour faire fonctionner une machine à couper, en particulier lorsque le programme est exécuté dans une unité de calcul (2) de la machine à couper (1) selon l'une des revendications 1 à 9.
